# EUROPEAN PATENT APPLICATION

(11) **EP 1 163 870 A1**
(43) Date of publication of application: **19.12.2001**
(21) Application number: 00830418.0
(22) Date of filing: 12.06.2000
(51) Int. Cl.: A47J 36/02, A47J 37/10, B21D 51/22

(54) **Process for heat moulding of frying pans**

(71) Applicant: Tutto S.p.A., 20094 Corsico (Milano) (IT)
(72) Inventor: Morando, Mauro, Cusago, Milano (IT)
(74) Representative: Tansini, Elio Fabrizio

(57) **Abstract**

A process for hot moulding of frying pans comprises the following steps: arranging a first plate-like element (2); arranging a second plate-like element (3); arranging a filling body (4) interposed at least partly between said first and second plate-like elements (2, 3); forming the first plate-like element (2) so as to define an upper bottom wall (2a) and an upper side wall (2b) emerging from said upper bottom wall (2a); forming the second plate-like element so as to define a lower bottom wall (3a) and a lower side wall (3b) emerging from said lower bottom wall (3a), the upper bottom wall (2a) and upper side wall (2b) in cooperation with the lower side wall (3b) and lower bottom wall (3a) defining an inner cavity (5); forming the filling body (4) so as to fill the inner cavity (5) at least partly. The step of forming the second plate-like element (3) and the step of forming the filling body (4) are coincident and the step of forming the filling body (4) comprises a sub-step of plastically deforming said filling body (4) so that it fills the inner cavity (5).

## Description

The present invention relates to a process for the hot moulding of frying pans.

It is known that in domestic and/or industrial kitchens most of the food is cooked in appropriate containers, such as pots or pans, directly placed over a heat source (which may be a gas flame or a disc heated by Joule effect, for example).

Generally, these containers must essentially fulfill two functions: first of all they must be able to conveniently contain the different foodstuffs used as ingredients in a preparation and at the same time they must ensure an optimal heat distribution in these foodstuffs, so as to avoid undesirable spreading of the ingredients during cooking and to enable distribution of the thermal energy from the underlying heat source as uniformly as possible in the food being prepared.

The generalized structure of the containers in question substantially comprises a bottom to be heated by a heat source and a side wall extending vertically from the bottom perimeter and designed to contain the foodstuffs to be cooked; generally these containers have a thoroughly cylindrical shape, but they may also have special forms depending on the particular requirements.

Containers for cooking food can be substantially grouped together so as to form two big families, distinction between them being made based firstly on the general structure of the containers themselves and secondly on the type of cooking processes to be carried out on the different food types.

A first family contemplates all containers intended for cooking processes that are particularly prolonged in time and/or require the presence of a great supply of material (or of ingredients); belonging to this family are containers commonly defined as "pots" and those currently known as "casseroles" or "saucepans". Typical examples of use of these containers concern preparation of boiled meat, "risotto", gastronomic preparations where there is the presence of much water (vegetable broths, sauces, etc., for example); generally, one can say that these containers have a substantially cylindrical shape with a great extension in the vertical direction as compared with the typical bottom sizes (the bottom therefore having a circular configuration); connected with this bottom, around the perimeter thereof, is a side wall that at its opposite end can terminate with a curved or at all events shaped rim. To be pointed out is the fact that pots generally have a connecting region at which the bottom is connected to the side wall substantially at a right angle or in any case without an extended curved portion.

Belonging to the second family are the so-called frying pans that are generally used for quick cooking and/or cooking operations that do not require a great supply of material for cooking; just as an indication, frying pans are used for preparing omelettes, thin slices of meat or fish, gastronomic preparations for side dishes (such as onions and herbs lightly fried in oil and the like), etc. The conformation of the frying pans is generally different from that of pots, above all as regards their vertical extension which is of much smaller size than the typical bottom size; another important difference consists in that in frying pans the side wall is connected to the bottom through a connecting region having a curved conformation or at all events showing a marked bending. As regards the last mentioned detail, the side wall of a pan may not necessarily be vertical but it may have some inclination.

The most important parameter in a container for cooking foodstuffs, from the point of views of the optimal execution of the cooking process, is achievement of the greatest homogeneity in heat distribution, during the cooking operations. It is in fact known that alternation of too much heated regions leads to burning of the food being cooked or at all events to damaging of same at least from an organoleptic point of view, whereas when there is an insufficient heating the cooking time inevitably is to be prolonged and there will be a decay in the food properties.

In accordance with the known art, manufacture of most containers for foodstuffs involves insertion of an appropriate thermal mass in the container bottom, said mass consisting of an aluminium block (or at all events a block of a material having optimal heat-conduction capabilities) and being intended for heat absorption and heat redistribution towards the inside of the container itself. It should be noted at this point that for reasons of mechanical strength and hygiene, containers for foodstuffs are usually made of stainless steel; this particular manufacturing choice essentially resides in that aluminium is particularly subject to get damaged in case of shocks and to phenomena of metal passivation (in contact with organic substances, humidity or heat sources), whereas steel is much more strong but has a worse thermal conductivity (being therefore subject to uneven heating). The last mentioned problem is particularly felt when the employed heat sources are usual gas cookers: it is in fact known that the flame produced in these devices is in the form of a crown and, as can be easily understood, there is concentration of heat in a corresponding region of the employed cooking container, which is particularly injurious as far as achievement of an optimal cooking of the food is concerned.

Insertion of the aluminium block in the pan bottom is generally carried out by hot moulding. Bottom formation involves moulding of a first steel plate and a second steel plate (the extensions of which will constitute the side wall), an aluminium block being interposed between these plates; during moulding the two steel plates are mechanically welded together so as to form a hollow space to be filled with the aluminium block which will be conveniently deformed as a result of the action of force exerted during moulding.

However, the known art briefly described above has some limits. In fact, although this production process is carried out at temperatures at which metals have some plasticity, important limitations exist in applying the moulding force due to the weak relative mechanical strength of aluminium as compared with steel; in other words, when aluminium is submitted to too strong pressures or at all events too strong deformations, there are risks of stretching or breaking or in any case risks that the material continuity should be interrupted and therefore homogeneity in heat distribution should not be ensured.

Another important drawback present in the known art resides in that it is impossible to extend, by hot moulding, the hollow space and therefore the aluminium block, so as to transmit heat to the side walls of the pan as well; this is once more due to the critical behaviour of aluminium submitted to moulding. This drawback is made still worse because the connecting region between the pan bottom and side wall has the already described angled conformation; therefore it is very hard and almost impossible for this connecting region to be efficiently filled with an aluminium block. This construction difficulty leads to the necessity of limiting the presence of the aluminium block to the pan bottom alone, and consequently heat homogeneity cannot be ensured to the pan side wall, which side wall, due to its extension, greatly helps in cooking processes.

A further series of drawbacks that on the other hand is connected with the preceding ones consists in that unevennesses and/or discontinuities produced in the aluminium layer by hot moulding can also lead to drawbacks of an aesthetic nature (irregular projections o recesses caused by unevennesses in the underlying aluminium), to worsening in the thermal conductivity due to the presence of air pockets between the two steel plates, as well as to phenomena of aluminium corrosion and partial or even full separation of the aluminium block from one or even both of the steel plates.

In order to eliminate these drawbacks at least partly, an alternative construction process has been devised; this new construction technique substantially consists in manufacturing a plate-like element made up of three layers, the outermost layers being made of steel and the central one of aluminium. This plate-like element, the three layers of which are obviously rigidly fixed to each other, is then submitted to moulding so as to form the pot or pan.

At all events, this construction technique too involves some important drawbacks: first of all, the problems connected with aluminium deformability still greatly affect manufacture of the finished products, mainly when particularly marked curved shapes or angled portions are to be achieved; another non negligible drawback resides in that the ends of the worked plate-like body in any case have a portion at which aluminium is exposed to the surrounding environment so that the already-mentioned problems of decay of the metal in contact with external agents (air, foodstuffs, heat) are still present.

In addition, the structure of the three-layered metal plate employed in this construction technique is rather problematic as regards provision and control of the plastic deformation; in fact, interfacing of three metal layers having different elastic features generates problems of congruency in deformations and this ultimately constitutes a limiting factor in determining a given shape of the container itself.

A further drawback connected with the last-mentioned technique consists in that, in addition to problems of hygienic and mechanical nature, the presence of a rim having an aluminium insert also involves a decay in the aesthetic qualities of the finished product, both from a visual point of view and as regards the impossibility of carrying out precise working operations on the rim itself (this being once more due to difficulties in working aluminium materials).

Finally, the last-mentioned technology involves important increases in the production costs and in costs for obtaining the semi-finished product.

Under this situation, the technical task underlying the present invention is to devise a process for the hot moulding of frying pans which is capable of substantially overcoming the cited limits.

In particular, within the scope of this technical task, it is an important aim of the invention to devise a process for the hot moulding of frying pans which is capable of ensuring an optimal thermal conductivity to the finished product.

In addition, it is an object of the present invention to devise a process for the hot moulding of frying pans which is capable of ensuring a great construction sturdiness and reliability to the finished products in the different use conditions, which process further has reduced production costs.

The technical task mentioned and the aims specified are substantially achieved by a process for the hot moulding of frying pans having the technical features described in the appended claims.

Description of a preferred but not exclusive embodiment of a frying pan made by adopting the process of the invention is now given hereinafter by way of non-limiting example and illustrated in the accompanying drawings, in which:

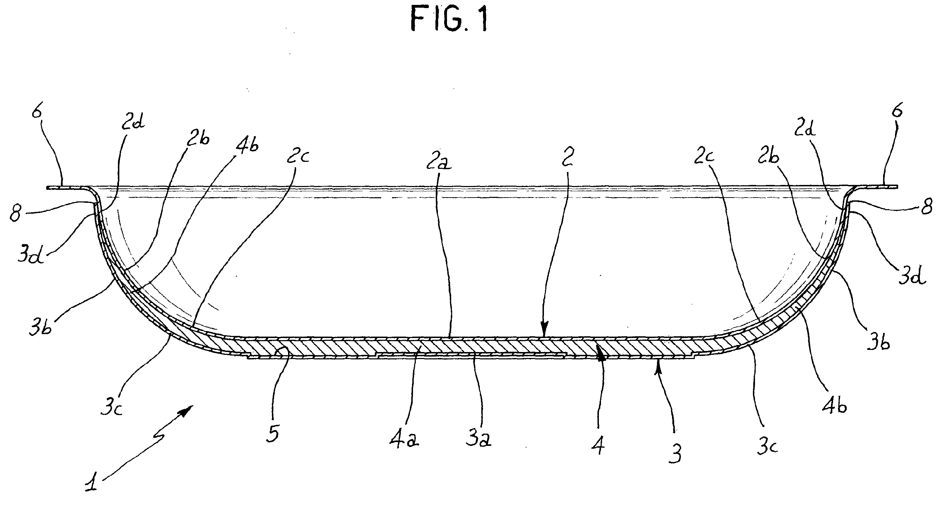

- Fig. 1 is a perspective view of a frying pan made by the production process of the present invention;
- Fig. 2 is a section taken along line II-II in Fig. 1 of the frying pan shown in Fig. 1; and

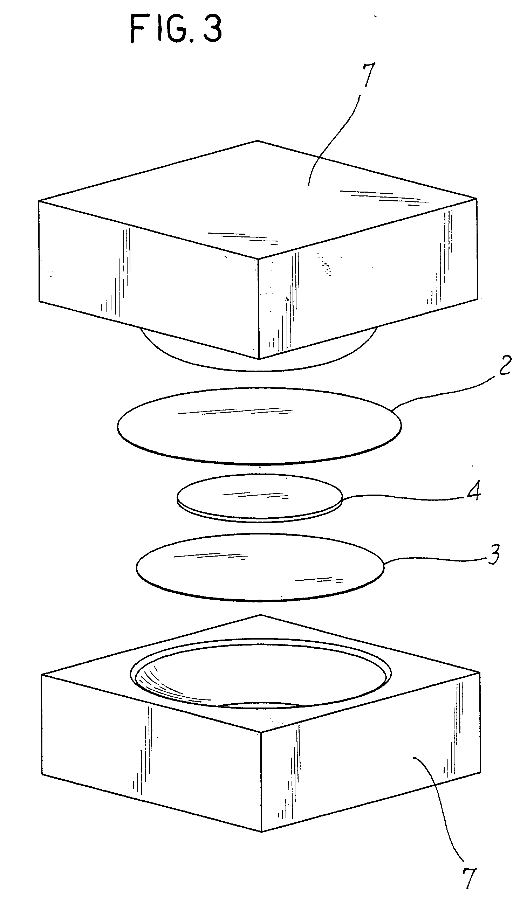

- Fig. 3 shows a longitudinal section of the frying pan in Fig. 1.

With reference to the drawings, the frying pan made by adopting the process of the invention is generally identified by reference numeral 1.

First of all the production process involves some preliminary steps, tending to arrange a first plate-like element 2, a second plate-like element 3 and a filling body 4; these construction elements are conveniently designed to form the finished pan.

Advantageously, the filling body 4 is a substantially cylindrical body consisting of a heat conductive material (aluminium, for example), whereas the first and second plate-like elements 2, 3 have a mainly disc-shaped conformation and are made of steel, so that they have optimal resistance features for exposition to the flame and optimal hygienic features for contact with the foodstuffs to be cooked.

At all events, according to the particular requirements these three construction elements can be arranged in any geometric configuration; for instance, arrangement of a first plate-like element 2 having a circular plan and of a second plate-like element 3 having a circular plan too but the radius of which is smaller than that of the first plate-like element 2 may be provided, whereas the base surface of the filling body 4 may have a radius of an intermediate amount with respect to the radii of said plate-like elements for reasons that will be clarified in the following.

During arrangement of the above described three construction elements, the filling body 4 must be at least partly interposed between the first plate-like element 2 and the second plate-like element 3; in addition, the three construction elements are placed relative to each other in such a manner that they are substantially centred on one and the same axis. In other words, the step of arranging the filling body 4 comprises a sub-step in which the filling body 4 is positioned at a substantially centred position relative to the lower and upper bottom walls 3a and 2a.

Subsequently to the arrangement step, the step of forming the first plate-like element 2 is carried out; during this operation an upper bottom wall 2a (of a substantially flat circular shape) and an upper side wall 2b (having the form of a crown and emerging from the upper bottom wall 2a) are defined.

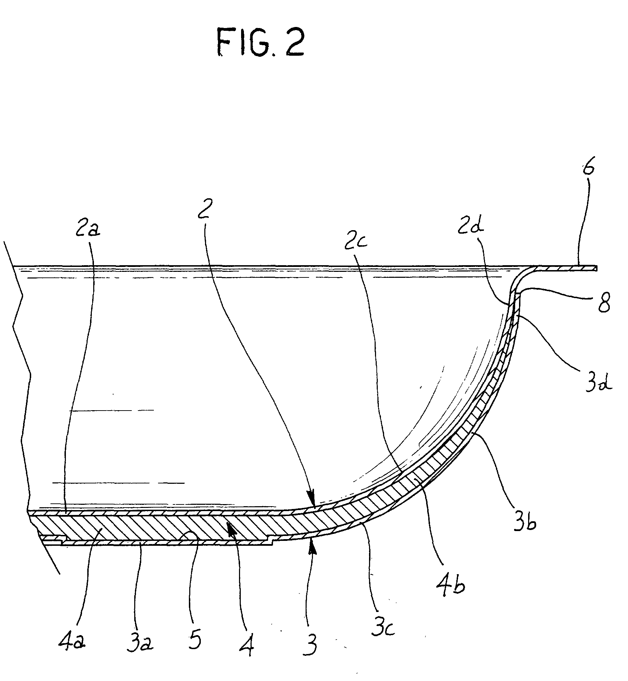

At the same time the second plate-like element 3 is formed; the second plate-like element 3 is such formed as to define a lower bottom wall 3a and a lower side wall 3b emerging from the lower bottom wall 3a (conveniently, the lower bottom wall 3a and the lower side wall 3b will have the same shape as the corresponding bottom and side walls of the first plate-like element). It should be understood at this point that the upper bottom wall 2a and the upper side wall 2b in cooperation with the lower side wall 3b and the lower bottom wall 3a define an inner cavity 5; in other words, as can be also viewed from Fig. 2, the two plate-like bodies are formed in such a manner that the two bottom walls 2a and 3a are substantially flat and disposed parallelly of each other, whereas the two side walls 2b and 3b rise upwardly with respect to the horizontal plane containing the two bottom walls 2a and 3a and have a substantially identical shape which is not planar.

The process of the invention further contemplates the step of forming the filling body 4, for the purpose of at least partly filling the inner cavity 5 obtained by formation of the first and second plate-like elements 2 and 3.

Advantageously, the step of forming the first plate-like element 2, the step of forming the second plate-like element 3 and the step of forming the filling body 4 are coincident, so that in a single working operation forming of all the construction elements required for obtaining the finished product is achieved.

It is to be noted that the step of forming the filling body 4 is accomplished, as on the other hand also the steps of forming the plate-like elements 2 and 3, by plastically deforming the filling body 4; in particular, plastic deformation is achieved in such a manner that the filling body 4 fills the inner cavity 5.

In accordance with the present invention, the step of forming the first plate-like element 2, the step of forming the second plate-like element 3 and the step of forming the filling body 4 are performed through moulding, in particular through hot moulding, so that the force required for carrying out the necessary deformations on the construction elements is reduced and possible breaking is avoided.

In more detail, it should be noted that the step of forming the first plate-like element 2 comprises a sub-step of forming an upper connecting portion 2c; this upper connecting portion 2c is connected without gap to the upper bottom wall 2a and the upper side wall 2b. Advantageously, the step of making the upper connecting portion 2c is coincident with the step of forming the first plate-like element 2. Likewise, during the step of forming the second plate-like element 3 a lower connecting portion 3c is formed which is connected without gap to the lower side wall 3b; conveniently, the upper and lower connecting portions, 2c and 3c, have an extension which is characterized by a bending, seen in section.

To complete finishing of the frying pan, the present process further contemplates the step of making a rim to the pan 1 itself; this rim 6 is formed at least on the upper side wall 2a and is obtained through working of the first plate-like steel element 2. Depending on requirements, rim 6 can be obtained by bending, calendering or pressing, or rim 6 can be made by acting on both the plate-like elements 2 and 3.

In an alternative embodiment of the production process in accordance with the present invention, a succession of working steps lightly different from those described above is provided.

First of all, a first plate-like element 2 is arranged and it is subsequently formed (by moulding, for example), so as to define an upper bottom wall 2a and an upper side wall 2b emerging from the upper bottom wall 2a. In other words, in these two first steps a workpiece is formed that will constitute the upper part of a pan.

After this upper part has been completed, a second plate-like element 3 is arranged and it is subsequently formed so as to define a lower bottom wall 3a and a lower side wall 3b emerging from the lower bottom wall 3a.

At this point it is to be noted that the two plate-like elements have such a shape that, once they are disposed in superposed relationship with each other, the upper bottom wall 2a and the upper side wall 2b in cooperation with the lower side wall 3b and the lower bottom wall 3a define an inner cavity 5.

Subsequently to formation of the first and second plate-like elements 2 and 3, in the alternative embodiment of the inventive process provision is made for a filling body 4, which is conveniently interposed between the first and second plate-like elements 2, 3; this filling body is formed in such a manner that it may at least partly fill the inner cavity 5 (defined by moving the above mentioned plate-like elements in superposed relationship with each other).

Conveniently, the step of forming the filling body 4 is obtained by hot moulding.

It is also to be pointed out that this alternative embodiment of the process further comprises a step of linking the first and second plate-like elements 2, 3 to the filling body 4; advantageously, this operation is carried out simultaneously with the step of forming the filling body 4; in other words, due to the force imparted by the machines employed for moulding, mechanical welding between the (previously formed) plate-like elements and the filling body 4 is caused exactly while said filling body is being deformed in order to fill the inner cavity 5 (defined by superposition of the two plate-like elements 2 and 3).

The frying pan made with the inventive process substantially comprises a first plate-like element 2 defining an upper bottom wall 2a and an upper side wall 2b (emerging from the upper bottom wall 2a); a second plate-like element 3 defining a lower bottom wall 3a and a lower side wall 3b (connected to the lower bottom wall 3a).

The lower bottom wall 3a and lower side wall 3b in cooperation with the upper side wall 2b and upper bottom wall 2a define an inner cavity 5 which substantially has a semi-lunar conformation, as shown in Fig. 2. In particular, the inner cavity has a central volume of a flattened cylindrical shape (generally with a constant thickness) to which a peripheral space is connected which has a radial section of a thickness gradually decreasing away from the centre of pan 1.

The inner cavity 5 is advantageously at least partly occupied by the filling body 4. In other words, the filling body 4 is disposed within the cavity 5 so as to completely occupy the space included between the lower bottom wall 3a and the upper bottom wall 2a while at the same time being extended in the space defined by the upper side wall and lower side wall 2b, 3b.

Due to its particular construction, the filling body performs the important function of channelling the heat flow from the flame (located under the lower bottom wall 3a) to the side walls 2b, 3b of the frying pan 1; in this way a homogeneous heat distribution is obtained and consequently the cooking processes for the different foods being cooked are improved both quantitatively and qualitatively.

In more detail, the filling body 4 is formally divided into two portions: a first portion 4a extending between the lower bottom wall 3a and the upper bottom wall 2a (i.e. the portion concerned with the direct heat flow from the flame) which has a substantially uniform thickness, and a second portion 4b (connected to the first portion 4a) extending between the upper side wall 2b and the lower side wall 3b which has a decreasing thickness on moving away from the first portion 4a. It is to be noted that thickness distribution in the filling body 4 substantially corresponds to the volume of the inner cavity 5; in other words the filling body is directly in contact with the plate-like elements 2 and 3 defining the inner cavity 5; in this way heat transmission from steel to aluminium is ensured by means of conductive heat exchanges and therefore inefficiency due to air pockets is prevented.

Conveniently, the upper and lower side walls 2b, 3b of pan 1 comprise an upper connecting portion 2c and a lower connecting portion 3c, respectively. These connecting portions are connected without gap with the respective bottom walls 2a, 3a and have a curved configuration with a rounded profile; alternatively, these connecting portions 2c, 3c can have an angled configuration, forming an obtuse angle with respect to the plane containing the bottom portions 2a, 3a.

As regards the connecting portions 2c, 3c, they may have a shape enabling sliding of aluminium towards the side walls 2b, 3b during execution of the operations for forming the frying pan 1; in other words, the inner cavity conformation at the connecting portions 2c, 3c is expressly studied to enable fitting of the filling body 4 within the inner cavity 5, said filling body being plastically deformed due to the mechanical action carried out by moulding.

Due to its being plastically deformed, the filling body 4 fully occupies the space included within the connecting portions, without being concerned with breaking phenomena or gap formation (which gaps can be created by too sudden variations in the section of the inner cavity 5 at the connecting region between the bottom and side wall, which typically occurs in pans).

The side walls 2b, 3b finally comprise upper and lower holding portions 2d, 3d connected with the connecting portions respectively and extending away from the bottom walls 2a, 3a. Obviously, these holding portions 2d, 3d perform the function of holding the foods being cooked in the frying pan 1 during cooking, even when particular working operations are to be carried out (whipping or stirring, for example); generally, these holding portions are substantially an extension of the connecting portions 2c, 3c and they have a shape with a much less marked bending than the latter or even show a planar conformation. In the last-mentioned case, the holding portions may be vertical portions or form an angle with respect to the plane of the bottom walls, depending on requirements.

The invention achieves important advantages.

First of all, the presence of aluminium over the whole curved portion of the pan enables a homogeneous distribution of the heat transmitted by the flame, thereby speeding up the cooking times and substantially reducing the risks of local burning or insufficient heating of the food being prepared.

Secondly, since the pan rim only consists of parts made of steel, the desired hygienic and functional requirements are achieved because contact of the food with aluminium is avoided and in addition the rim can be worked in a very flexible manner so as to obtain rounded or recessed profiles as well as profiles of any other shape.

In addition, the particular conformation of the connecting region between the pan bottom and side wall enables all problems connected with hot forming of aluminium to be substantially eliminated, thereby overcoming all technical/aesthetical drawbacks previously described in this connection.

Another advantage consists in that the absence of aluminium in the metal portions intended to become the pan rim enables accomplishment of a wide working flexibility in terms of possible shaping of the rim and in addition aluminium is not exposed to the surrounding atmosphere.

Furthermore, due to the extension of the aluminium layer, sturdiness of the pan is increased and the pan lifetime is reasonably prolonged.

Also important is the fact that the method of producing the inventive pan enables reduction in costs and makes the manufacturing processes much easier.

## Claims

1. A process for hot moulding of frying pans comprising the following steps:
- arranging a first plate-like element (2);
- arranging a second plate-like element (3);
- arranging a filling body (4) at least partly interposed between said first and second plate-like elements (2, 3);
- forming the first plate-like element (2) so as to define an upper bottom wall (2a) and an upper side wall (2b) emerging from said upper bottom wall (2a);
**characterized in that** it further comprises the steps of:
- forming the second plate-like element so as to define a lower bottom wall (3a) and a lower side wall (3b) emerging from said lower bottom wall (3a), the upper bottom wall (2a) and the upper side wall (2b) in cooperation with the lower side wall (3b) and the lower bottom wall (3a) defining an inner cavity (5); and
- forming the filling body (4) to fill the inner cavity (5) at least partly.

2. A process as claimed in claim 1, **characterized in that** the step of forming the first plate-like element (2), the step of forming the second plate-like element (3) and the step of forming the filling body (4) are coincident.

3. A process as claimed in anyone of the preceding claims, **characterized in that** the step of forming the filling body (4) comprises a sub-step of plastically deforming said filling body (4) so that it fills the inner cavity (5).

4. A process as claimed in anyone of the preceding claims, **characterized in that** the step of forming the first plate-like element (2), the step of forming the second plate-like element (3) and the step of forming the filling body (4) are carried out by moulding, in particular by hot moulding.

5. A process as claimed in anyone of the preceding claims, **characterized in that** the step of arranging the filling body (4) comprises a sub-step of interposing said filling body (4) at a substantially centred position with respect to the lower and upper bottom walls (3a, 2a).

6. A process as claimed in anyone of the preceding claims, **characterized in that** the step of forming the first plate-like element (2) comprises a sub-step of forming an upper connecting portion (2c) connected without gap to the upper bottom wall (2a) and the upper side wall (2b).

7. A process as claimed in claim 4, **characterized in that** the step of making said upper connecting portion (2c) is coincident with at least the step of forming the first plate-like element (2).

8. A process as claimed in anyone of the preceding claims, **characterized in that** the step of forming the second plate-like element (3) comprises a sub-step of forming a lower connecting portion (3c) connected without gap to the lower bottom wall (3a) and the lower side wall (3b).

9. A process as claimed in claim 8, **characterized in that** the step of making said lower connecting portion (3c) is coincident with at least the step of forming the second plate-like element (3).

10. A process as claimed in anyone of the preceding claims, **characterized in that** it further comprises the step of making a rim (6) formed at least on the upper side wall (2a), said rim (6) being in particular made by bending, calendering or pressing:

11. A process as claimed in anyone of the preceding claims, comprising the following steps:
- arranging a first plate-like element (2);
- subsequently forming the first plate-like element (2) so as to define an upper bottom wall (2a) and an upper side wall (2b) emerging from said upper bottom wall (2a);
- subsequently arranging a second plate-like element (3);
- subsequently forming the second plate-like element (3) so as to define a lower bottom wall (3a) and a lower side wall (3b) emerging from said lower bottom wall (3a), the upper bottom wall (2a) and upper side wall (2b) in cooperation with the lower side wall (3b) and the lower bottom wall (3a) defining an inner cavity (5);
- subsequently to the steps of forming the first and second plate-like elements (2, 3), arranging a filling body (4) interposed at least partly between said first and second plate-like elements (2, 3); and
- subsequently forming the filling body (4) so that it fills the inner cavity (5) at least partly.

12. A process as claimed in claim 11, **characterized in that** the step of forming the filling body (4) is achieved by hot moulding.

13. A process as claimed in claims 11 and 12, **characterized in that** it further comprises the step of linking the first and second plate-like elements (2, 3) to the filling body (4).

14. A process as claimed in anyone of claims 11 to 13, **characterized in that** the step of linking the first and second plate-like elements (2, 3) to the filling body (4) is achieved simultaneously with the step of forming the filling body (4).

15. A frying pan made by a process as claimed in anyone of the preceding claims, comprising:
- a first plate-like element (2) defining an upper bottom wall (2a) and an upper side wall (2b) connected with the upper bottom wall (2a);
**characterized in that** it further comprises a second plate-like element (3) defining a lower bottom wall (3a) and a lower side wall (3b) connected with the lower bottom wall (3a), the lower bottom wall (3a) and lower side wall (3b) in cooperation with the lower side wall (3b) and the lower bottom wall (3a) defining an inner cavity (5), and **in that** it comprises a filling body (4) contained at least partly within the inner cavity (5).

16. A frying pan as claimed in claim 15, **characterized in that** the filling body (4) is made of a heat-conductive material, preferably aluminium.

17. A frying pan as claimed in claim 15, **characterized in that** the first and second plate-like elements (2, 3) are made of steel.

18. A frying pan as claimed in claim 15, **characterized in that** the filling body (4) comprises:
- a first portion (4a) extending between the lower bottom wall (3a) and the upper bottom wall (2a) and having a substantially uniform thickness; and
- a second portion (4b) connected with said first portion (4a) and extending between the upper side wall (2b) and the lower side wall (3b), said second portion (4b) having a decreasing thickness away from said first portion (4a).

19. A frying pan as claimed in anyone of claims 15 to 19, **characterized in that** the upper and lower side walls (2b, 3b) comprise an upper and a lower connecting portions (2c, 3c) respectively, which are connected without gap to the respective bottom walls (2a, 3a), and upper and lower holding portions (2d, 3d) connected with said connecting portions respectively and extending away from the bottom walls (2a, 3a).

20. A frying pan as claimed in claims 17 and 19, **characterized in that** the filling body (4) completely extends between the upper connecting portion (2c) and lower connecting portion (3c).

21. A frying pan as claimed in anyone of claims 15 to 20, **characterized in that** the first plate-like element (2) and second plate-like element (3) define a region of mutual contact (7) adapted to separate the inner cavity (5) from the surrounding environment.
